(19) **Europäisches Patentamt**
**European Patent Office**
**Office européen des brevets**

(11) **EP 4 617 950 A1**

(12) **EUROPEAN PATENT APPLICATION**

(43) Date of publication:
**17.09.2025 Bulletin 2025/38**

(21) Application number: **24163474.0**

(22) Date of filing: **14.03.2024**

(51) International Patent Classification (IPC):
**G06N 3/045** (2023.01)

(52) Cooperative Patent Classification (CPC):
**G06N 3/045; G06N 3/08**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **Robert Bosch GmbH**
**70442 Stuttgart (DE)**

(72) Inventors:
• **Khoreva, Anna**
**70197 Stuttgart (DE)**
• **Bini, Massimo**
**72072 Tübingen (DE)**

Remarks:
Amended claims in accordance with Rule 137(2) EPC.

(54) **DEVICE AND COMPUTER IMPLEMENTED METHOD FOR ADAPTING A IN PARTICULAR PRETRAINED MODEL TO A TASK**

(57) Device and method for adapting a in particular pretrained model (106) to a task, wherein the method comprises providing the in particular pretrained model (106), wherein the in particular pretrained model (106) comprises a layer that is configured to map a multidimensional input of the layer depending on weights to a multidimensional output of the layer, wherein a vector comprises a subset of the weights that weighs the elements of the multidimensional input for a dimension of the output of the layer, wherein the method comprises providing training data and learning at least one vector of a transformation for adapting the subset of the weights depending on the training data and the output of the model (106), wherein the at least one vector has unit length, and the transformation comprises an outer product of the at least one vector with the transposed of the at least one vector, or wherein the at least one vector is normalized to have unit length, and wherein the transformation comprises an outer product of the normalized at least one vector with the transposed of the normalized at least one vector.

**Fig. 1**

EP 4 617 950 A1

**Description**

Background

The invention relates to a device and a computer implemented method for adapting a in particular pretrained model to a task.

In deep learning, a model may be pretrained for a variety of tasks. The pretrained model may then be adapted to a specific task of the variety of tasks.

Disclosure of the invention

The device and the computer implemented method efficiently adapt a in particular pretrained model to a task, in particular the task of outputting, depending on the input of the model, a classification, a digital image, audio data, or video data, or virtual sensor data.

The method for adapting a in particular pretrained model to a task comprises providing the in particular pretrained model, wherein the in particular pretrained model comprises a layer that is configured to map a multidimensional input of the layer depending on weights to a multidimensional output of the layer, wherein a vector comprises a subset of the weights that weighs the elements of the multidimensional input for a dimension of the output of the layer, wherein the method comprises providing training data and learning at least one vector of a transformation for adapting the subset of the weights depending on the training data and the output of the model, wherein the at least one vector has unit length, and the transformation comprises an outer product of the at least one vector with the transposed of the at least one vector or wherein the at least one vector is normalized to have unit length, and the transformation comprises an outer product of the normalized at least one vector with the transposed of the normalized at least one vector. According to an example, the transformation is determined for a layer comprising a forward pass $y=Wx+b$, where $x$ is the input, $y$ is the output, $b$ an optional bias, and $W$ the weights that will be transformed by the method. The transformation may be based on one vector $u$ or more vectors, e.g. on two vectors $u,v$. A vector of the transformation defines a hyperplane. The result of the transformation with one vector is a reflection of the weight vector with respect to the hyperplane. The result of the transformation with two vectors is a more complex transformation involving the interaction of two hyperplanes. Learning the at least one vector is very efficient in terms of computational resources.

The transformation may comprise a single vector, wherein the learning comprises determining the output of the layer depending on a product of the transformation with the weights. This means, the same transformation is used for the different subsets of the weights.

For the single vector, the transformation comprises a matrix. The matrix corresponding to the transformation has a constant Frobenius distance to the Identity matrix. This reduces the risk of catastrophic overwriting of weights.

The transformation may comprise a first vector and a second vector, wherein the learning comprises learning the first vector and the second vector wherein the transformation comprises a difference between the outer product of the second vector with the transposed of the second vector and the outer product of the first vector with the transposed of the first vector. This allows for more nuanced weight adjustment than learning a single vector.

For the first vector and the second vector, the transformation comprises a matrix. The matrix corresponding to the transformation has a bounded Frobenius distance to the Identity matrix. This reduces the risk of catastrophic overwriting of weights.

Learning the first vector and the second vector may comprise determining the output of the layer depending on a result of a product of the transformation with the weights, wherein the output of the layer depends on a product of the result with a transformation that comprises an outer product of another first vector with the transposed of the other first vector, wherein the other first vector has unit length, or wherein the other first vector is normalized to have unit length, and the transformation comprises an outer product of a second other vector with the transposed of the other second vector, wherein the other second vector has unit length, or wherein the other second vector is normalized to have unit length. This means, the output depends on a product of the result with another transformation of the same type as the transformation.

The model may comprise a plurality of layers, wherein the method comprises learning, for the respective layers of the plurality of layers a respective at least one vector depending on the training data.

The model may be configured to determine the input of the layer depending on an input of the model and an output of the model depending on the output of the layer, wherein the training data comprises pairs of an input of the model and a ground truth for an output of the model, wherein the input represents or comprises a sensor signal, and wherein the output and the ground truth represents or comprises a classification of the sensor signal, or wherein the input represents or comprises text, and the output and the ground truth represents or comprises a digital image and/or or an audio signal, or wherein the input represents or comprises text and a semantic map, and the output and the ground truth represents or comprises a digital image, or wherein the input represents or comprises at least one operating quantity of a technical system and the output and the ground truth represents or comprises a sensor signal.

The method may comprise receiving an input of the model that comprises or represents information about a technical system, determining an output of the adapted model that the adapted model outputs for the input of the model, and outputting the output of the adapted model and/or operating the technical system depending on the output or the adapted model.

The device for adapting a pretrained model to a task comprises at least one processor and at least one memory, wherein the at least one memory comprises instructions that are executable by the at least one processor, and that, when executed by the at least one processor cause the device to execute the method for adapting a pretrained model to a task.

A computer program may comprise instructions that are executable by a computer and that, when executed by the computer, cause the computer to execute the method for adapting a pretrained model to a task.

A data structure, in particular a computer implemented data structure, for adapting an in particular pretrained mode to a task, wherein the data structure comprises at least one data field for an in particular pretrained model, wherein the in particular pretrained model comprises a layer that is configured to map a multidimensional input of the layer depending on weights to a multidimensional output of the layer, wherein the data structure comprises at least one data field for a vector that comprises a subset of the weights that weighs the elements of the multidimensional input for a dimension of the output of the layer, wherein the data structure comprises at least one data field for training data, and at least one data field for a transformation and for at least one vector of the transformation for adapting the subset of the weights, wherein the at least one vector has unit length, and the transformation comprises an outer product of the at least one vector with the transposed of the at least one vector, or wherein the at least one vector is normalized to have unit length, and the transformation comprises an outer product of the normalized at least one vector with the transposed of the normalized at least one vector.

Further embodiments are derived from the following description and the drawing. In the drawing,

Fig. 1 schematically depicts a device for adapting a pretrained model to a task,
Fig. 2 aspects of a first exemplary transformation for adapting the pretrained model to the task,
Fig. 3 aspects of a second exemplary transformation for adapting the pretrained model to the task,
Fig. 4 schematically depicts a flow chart comprising steps of a method for adapting the pretrained model to the task.

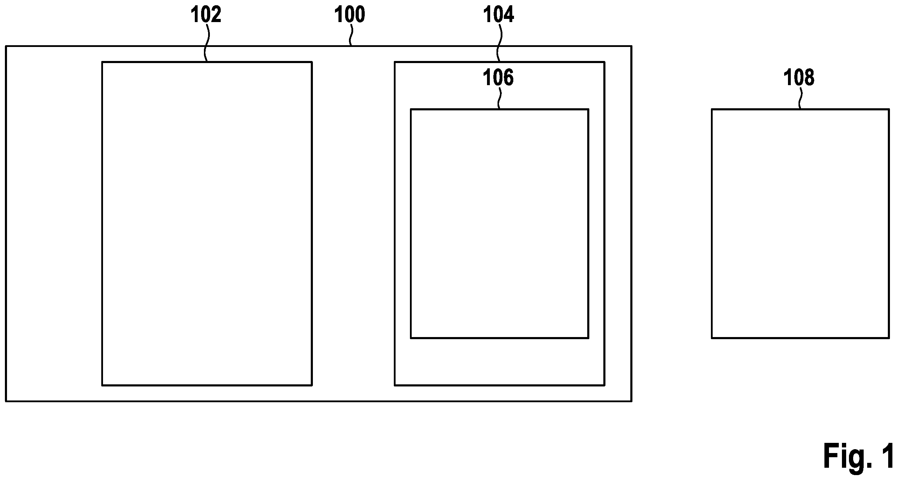

Figure 1 schematically depicts a device 100. The device 100 comprises at least one processor 102 and at least one memory 104. The at least one memory 104 stores instructions. The at least one processor 102 is configured to execute the instructions.

The device 100 is configured for executing a method for adapting a pretrained model 106 to a task. The instructions, when executed by the at least one processor, cause the device 100 to execute the method.

In the example, the at least one memory 104 stores the model 106.

The model 106 may be configured to receive input that comprises or represents information about a technical system 108. The model 106 may be configured to determine an output of the model 106 for operating the technical system 108 depending on the input of the model 106.

The technical system 108 may be a robot, in particular a vehicle. The technical system 108 may be a computer controlled machine, in particular a manufacturing machine, a power tool, a household appliance, or a personal assist system.

According to an example, the model 106 is a neural network that is configured to determine an output of the model 106 depending on an input of the model 106.

The neural network comprises at least on layer, that is configured to determine an output of the layer depending on an input of the layer.

According to an example, the neural network comprises a series of layers. The series of layers comprises an input layer, that is configured to receive the input of the model. The series of layers comprises an output layer that is configured to output the output of the model. The neural network comprises at least one layer I between the input layer and the output layer. A layer I that is arranged between the input layer and the output layer is configured to determine an output y of the layer depending on an input x of the layer, weights $W \in \mathbb{R}^{d \times f}$ and an optional bias $b \in \mathbb{R}^{f}$:

$$y = W^{T}x + b$$

According to an example, the input x of a layer $l_i$ of a series of n layers $l_i$, $i = 1, ..., n$ that are arranged between the input layer and the output layer is determined with an activation function $\phi$ depending on the output $y_i$ of a layer $l_{i-1}$ preceding the layer $l_i$ $x = \phi(y)$ a plurality of layers.

The input of the first layer $l_0$ is the input of the model 106. The output of the last layer $l_n$ is the output of the model 106.

According to the example, the weights W are pretrained.

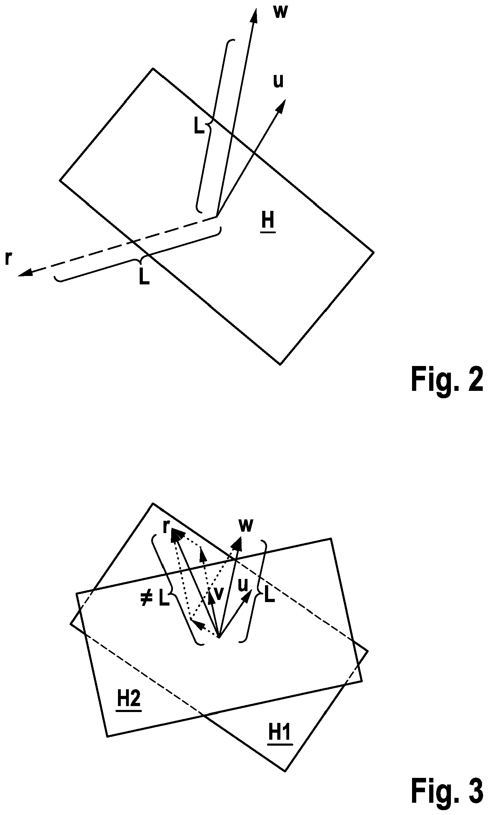

Figure 2 depicts aspects of a first exemplary transformation for adapting the weights W of the pretrained model 106 to the task.

The first transformation represents a hyperplane reflection.

Figure 2 depicts a hyperplane H, and a reflected weight $r$ of a weight vector $w \in \mathbb{R}^d$. The weight vector $w$ is a vector of length L. The weight vector w comprises the weights from the weights $W$ that weigh the elements of the multidimensional input $x \in \mathbb{R}^d$ for a single dimension of the output $y$. The reflected weight r is obtained via a transformation matrix $H \in \mathbb{R}^{d \times d}$:

$$H = I - 2uu^T$$

wherein $u \in \mathbb{R}^d$ is a learnable hyperplane unit normal vector and $uu^T$ is the outer product of the vector $u$ with the transposed $u^T$ of the vector $u$. This means, the vector $u$ has unit length, i.e., the square of the d elements $u_i$ of the vector $u$ sum up to one: $u_1^2 + u_2^2 + \cdots + u_d^2 = 1$.

The matrix $H$ corresponding to the first transformation has a constant Frobenius distance with respect to the Identity matrix $I \in \mathbb{R}^{d \times d}$.

According to the example, the reflected weight r is a vector that has to retain length L.

The reflected weight $r$ of the weight vector $w$ is determined depending on the transformation:

$$Hw = (I - 2uu^T)w = w - 2u(u^Tw)$$

Based on the transformation H, the output y of the adapted layer depends on the forward pass $(HW)^Tx + b$.

Figure 3 depicts aspects of a second exemplary transformation for adapting the pretrained model 106 to the task.

The second transformation involves two interacting hyperplanes, a first hyperplane $H_1$ and a second hyperplane $H_2$. For adapting a layer, two distinct transformation matrices $H^+$ and $\hat{H}^+$ of the second transformation are learned.

Figure 3 depicts the first hyperplane $H_1$ and the second hyperplane $H_2$. Figure 3 depicts a transformation, involving the interaction of the first hyperplane $H_1$ and the second hyperplane $H_2$ of a weight vector $w \in \mathbb{R}^d$. Figure 3 depicts the resulting transformed weight r. The resulting transformed weight r does not need to retain length L. Figure 3 depicts an example, wherein the length of the resulting transformed weight r is not equal to the length L. The weight vector w comprises the weights from the weights $W$ that weigh the elements of the multidimensional input $x \in \mathbb{R}^d$ for a single dimension of the output y.

The output y of the adapted layer depends on the forward pass $(H^+W\hat{H}^+)^Tx + b$.

The transformation matrix $H^+ \in \mathbb{R}^{d \times d}$ is obtained as:

$$H^+ = I - uu^T + vv^T$$

wherein $u \in \mathbb{R}^d$ is a first learnable hyperplane unit normal vector associated with the first hyperplane $H_1$, wherein $v \in \mathbb{R}^d$ is a second learnable hyperplane unit normal vector associated with the second hyperplane $H_2$, wherein $uu^T$ is the outer product of the first vector $u$ with the transposed $u^T$ of the first vector $u$, and wherein $vv^T$ is the outer product of the second vector $v$ with the transposed $v^T$ of the second vector v. The first vector $u$ has unit length, i.e., the square of the d elements $u_i$ of the vector $u$ sum up to one: $u_1^2 + u_2^2 + \cdots + u_d^2 = 1$. The second vector $v$ has unit length, i.e., the square of the d elements $v_i$ of the vector $v$ sum up to one: $v_1^2 + v_2^2 + \cdots + v_d^2 = 1$.

The matrix $H^+$ of the second transformation has a bounded Frobenius distance with respect to the Identity matrix

$$I \in \mathbb{R}^{d \times d}.$$

The transformation matrix $H^+$ of the column weight vector $w$ is determined depending on:

$$H^+w = (I - uu^T + vv^T)w = w - u(u^Tw) + v(v^Tw)$$

The transformation matrix $\widehat{H}^+ \in \mathbb{R}^{f \times f}$ is obtained accordingly as:

$$\widehat{H}^+ = I - \hat{u}\hat{u}^T + \hat{v}\hat{v}^T$$

with a learnable first vector $\hat{u} \in \mathbb{R}^f$ and a learnable second vector $\hat{v} \in \mathbb{R}^f$. The first vector $\hat{u}$ has unit length. The second vector $\beta$ has unit length.

The matrix $H^+$ of the second transformation has a bounded Frobenius distance with respect to the Identity matrix $I \in \mathbb{R}^{f \times f}$.

The transformation matrix $\hat{H}^+$ of the row weight vector $\widehat{w}^T \in \mathbb{R}^f$ is determined depending on:

$$\widehat{w}^T\widehat{H}^+ = \widehat{w}^T(I - \hat{u}\hat{u}^T + \hat{v}\hat{v}^T) = \widehat{w}^T - (\widehat{w}^T\hat{u})\hat{u}^T + (\widehat{w}^T\hat{v})\hat{v}^T$$

The transformation matrices $H^+$, $\hat{H}^+$ are learned with a method for adapting the pretrained model 106. This means, the respective first vector $u$, $\hat{u}$ and the respective second vector $v$, $\hat{v}$ are learned.

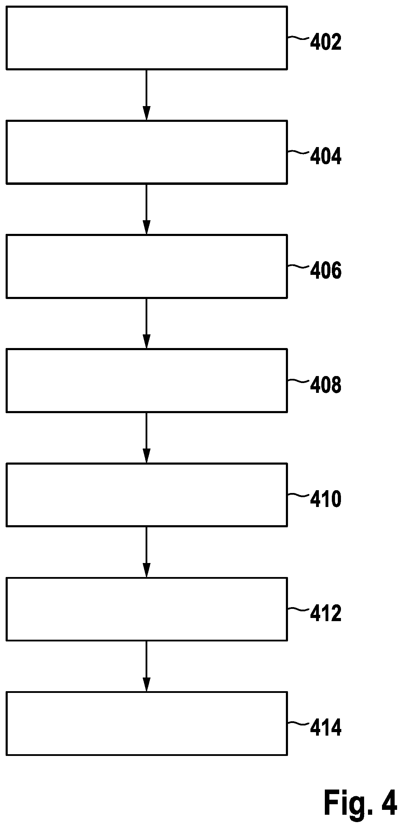

Figure 4 schematically depicts a flow chart comprising steps of the method for adapting the pretrained model 106 to a task.

The method comprises a step 402.

In the step 402 the pretrained model 106 is provided.

The pretrained model 106 comprises layers $l_i$. A layer $l_i$ is configured to map a multidimensional input $x_i$ of the layer $l_i$ depending on weights $W_i$ and an optional bias $b_i$ to a multidimensional output:

$$y_i = W_i^T x_i + b_i$$

The weights $W_i$ comprise vectors $w_{i,j}$ that comprise a respective subset of the weights $W_i$ that weighs the elements of the multidimensional input $x_i$ for a dimension j of the output $y_{i,j}$ of the layer $l_i$.

The method comprises a step 404.

In the step 404 training data is provided.

The training data comprises pairs of an input of the model 106 and a ground truth for an output of the model 106. The input of the model 106 may comprise or represent the information about the technical system 108. The output of the model 106 may be the output for operating the technical system 108.

The training data is provided according to the task.

For the task of classifying a sensor signal, the input for example represents or comprises a sensor signal, and the output and the ground truth for example represents or comprises a classification of the sensor signal.

For the task of generating content, e.g. a digital image or audio signal, the input for example represents or comprises text, and the output and the ground truth for example represents or comprises a digital image and/or or an audio signal.

For the task of generating a digital image the input for example represents or comprises text and a semantic map, and the output and the ground truth represents or comprises a digital image.

For the task of virtual sensing, the input for example represents or comprises at least one operating quantity of the technical system 108 and the output and the ground truth represents or comprises a sensor signal.

The method comprises a step 406.

In the step 406 the transformation for at least one layer $l_i$ is learned depending on the training data.

This means, at least one vector of the transformation is learned.

According to an example, for the first transformation, the vector $u_i$ of the transformation $H_i$ for the layer $l_i$ is learned. This means that the transformation comprises a single vector $u_i$ and the learning comprises determining the output $y_i$ of the layer $l_i$ depending on a product of the transformation $H_i$ with the weights $W_i$ of the layer $l_i$ and a bias $b_i$ The vector $u_i$ has unit

length, and the transformation $H_i$ comprises the outer product $u_i u_i^T$ of the vector $u_i$ with the transposed $u_i^T$ of the vector $u_i$

$$y_i = (H_i W_i)^T x + b_i$$

According to an example, for the second transformation, the vectors $u_i$, $v_i$ of the transformation $H_i^+$ and the vectors $\hat{u}_i$, $\hat{v}_i$ of the transformation $\widehat{H}_i^+$ for the layer $l_i$ are learned.

This means that the second transformation comprises a first vector $u_i$ and a second vector $v_i$ of the transformation $H_i^+$ and a first vector $\hat{u}_i$ and a second vector $\hat{v}_i$ of the transformation $\widehat{H}_i^+$. This means the learning comprises determining the output $y_i$ of the layer $l_i$ depending on an optional bias $b_i$ and on a result $H_i^+ W_i$ of a product of the transformation $H_i^+$ with the weights $W_i$, wherein the output $y_i$ of the layer $l_i$ depends on a product of the result $H_i^+ W_i$ with the transformation $\widehat{H}_i^+$:

$$y_i = \left( H_i^+ W_i \widehat{H}_i^+ \right)^T x + b_i$$

The first vector $u_i$ of the transformation $H_i$ has unit length, and the transformation $H_i$ comprises the outer product $u_i u_i^T$ of the first vector $u_i$ with the transposed $u_i^T$ of the first vector $u_i$. The second vector $v_i$ of the transformation $H_i$ has unit length, and the transformation $H_i$ comprises the outer product $v_i v_i^T$ of the second vector $v_i$ with the transposed $v_i^T$ of the second vector $v_i$. According to the example, the transformation $H_i$ comprises a difference between the outer product $v_i v_i^T$ of the second vector $v_i$ with the transposed $v_i^T$ of the second vector $v_i$ and the outer product $u_i u_i^T$ of the first vector $u_i$ with the transposed $u_i^T$ of the first vector $u_i$.

The first vector $\hat{u}_i$ of the transformation $\hat{H}_i$ has unit length, and the transformation $\hat{H}_i$ comprises the outer product $\hat{u}_i \hat{u}_i^T$ of the first vector $\hat{u}_i$ with the transposed $\hat{u}_i^T$ of the first vector $\hat{u}_i$. The second vector $\hat{v}_i$ of the transformation $\hat{H}_i$ has unit length, and the transformation $\hat{H}_i$ comprises the outer product $\hat{v}_i \hat{v}_i^T$ of the second vector $\hat{v}_i$ with the transposed $\hat{v}_i^T$ of the second vector $\hat{v}_i$. According to the example, the transformation $\hat{H}_i$ comprises a difference between the outer product $\hat{v}_i \hat{v}_i^T$ of the second vector $\hat{v}_i$ with the transposed $\hat{v}_i^T$ of the second vector $\hat{v}_i$ and the outer product $\hat{u}_i \hat{u}_i^T$ of the first vector $\hat{u}_i$ with the transposed $\hat{u}_i^T$ of the first vector $\hat{u}_i$.

The method may comprise learning the transformation for a single layer $l_i$ or for a respective layer $l_i$ of the plurality of layers of the model 106.

This means, for the first transformation, the method may comprise learning a single vector $u_i$ for the single layer $l_i$, or a respective single vector $u_i$ for the respective layers $l_i$ depending on the training data.

This means, for the second transformation, the method may comprise learning the first vector $u_i$ and the second vector $v_i$ and the first vector $\hat{u}_i$ and the second vector $\hat{v}_i$ for the single layer $l_i$, or a respective first vector $u_i$ and second vector $v_i$ and a respective first vector $\hat{u}_i$ and second vector $\hat{v}_i$ for the respective layers $l_i$ depending on the training data.

Learning may comprise determining the vector $u_i$ or determining the first vector $u_i$ and the second vector $v_i$ or determining the first vector $\hat{u}_i$ and the second vector $\hat{v}_i$ for the layer $l_i$ or for the layers $l_i$ that minimize a loss that depends on the difference between the output of the model 106 and the ground truth.

The method comprises a step 408.

In the step 408 an input of the model 106 that comprises or represents information about the task is received.

According to an example, the input comprises or represents information about the technical system 108.

The method comprises a step 410.

In the step 410 an output of the adapted model 106 that the adapted model 106 outputs for the received input of the model 106 is determined.

According to an example, the output comprises or represents an output for operating the technical system 108.

The method comprises a step 412.

In the step 412, the output of the adapted model 106 is output.

According to an example, the output is output for operating the technical system 108 depending on the output of the adapted model 106.

The method may comprise a step 414.

In the step 414, the technical system 108 is operated depending on the output of the adapted model 106.

For example, the technical system 108 is the robot, in particular a vehicle. For example, the input is a digital image, e.g., comprising an object representing a traffic participant or infrastructure.

For example, the output is a classification of the object. The robot may be operated to move the robot on a trajectory that is determined depending on the classification of the object, e.g., to avoid the object or to drive over the object.

For example, the technical system 108 is the computer controlled machine. The computer controlled machine may be operated to produce a workpiece depending on the output of the model 106. The computer controlled machine may comprise a human machine interface or a machine to machine interface. The computer controlled machine may be operated receive the input via the interface and/or to output the output of the model 106 via the interface.

In the examples, $u_i$, $v_i$, $\hat{u}_i$, $\hat{v}_i$ are learnable vectors. It is not required that all of the vectors $u_i$, $v_i$, $\hat{u}_i$, $\hat{v}_i$ are learnable vectors.

The learnable vectors in the example have unit length. It is not required that the learnable vectors have unit length. The learnable vectors may be vectors of a different length than the unit length that are normalized or scaled to have unit length. This means, that at least one vector may be normalized to have unit length, and the transformation that is based on the at least one vector comprises an outer product of the normalized at least one vector with the transposed of the normalized at least one vector.

**Claims**

1. A method for adapting an in particular pretrained model (106) to a task, **characterized in that** the method comprises providing (402) the in particular pretrained model (106), wherein the in particular pretrained model (106) comprises a layer that is configured to map a multidimensional input of the layer depending on weights to a multidimensional output of the layer, wherein a vector comprises a subset of the weights that weighs the elements of the multidimensional input for a dimension of the output of the layer, wherein the method comprises providing (404) training data and learning (406) at least one vector of a transformation for adapting the subset of the weights depending on the training data and the output of the model (106), wherein the at least one vector has unit length, and the transformation comprises an outer product of the at least one vector with the transposed of the at least one vector, or wherein the at least one vector is normalized to have unit length, and the transformation comprises an outer product of the normalized at least one vector with the transposed of the normalized at least one vector.

2. The method according to claim 1, **characterized in that** the transformation comprises a single vector, wherein the learning (406) comprises determining the output of the layer depending on a product of the transformation with the weights.

3. The method according to claim 1, **characterized in that** transformation comprises a first vector and a second vector, wherein the learning (406) comprises learning the first vector and the second vector wherein the transformation comprises a difference between the outer product of the second vector with the transposed of the second vector and the outer product of the first vector with the transposed of the first vector.

4. The method according to claim 3, **characterized in that** learning the first vector and the second vector comprises determining the output of the layer depending on a result of a product of the transformation with the weights, wherein the output of the layer depends on a product of the result with a transformation that comprises an outer product of another first vector with the transposed of the other first vector, wherein the other first vector has unit length, or wherein the other first vector is normalized to have unit length, and the transformation comprises an outer product of a second other vector with the transposed of the other second vector, wherein the other second vector has unit length, or wherein the other second vector is normalized to have unit length.

5. The method according to one of the preceding claims, **characterized in that** the model (106) comprises a plurality of layers, wherein the method comprises learning (406), for the respective layers of the plurality of layers a respective at least one vector depending on the training data.

6. The method according to one of the preceding claims, **characterized in that** the model (106) is configured to determine the input of the layer depending on an input of the model (106) and an output of the model (106) depending on the output of the layer, wherein the training data comprises pairs of an input of the model and a ground truth for an output of the model, wherein the input represents or comprises a sensor signal, and wherein the output and the ground truth represents or comprises a classification of the sensor signal, or wherein the input represents or comprises text, and the output and the ground truth represents or comprises a digital image and/or or an audio signal, or wherein the input represents or comprises text and a semantic map, and the output and the ground truth represents or comprises a digital image, or wherein the input represents or comprises at least one operating quantity of a technical system and the output and the ground truth represents or comprises a sensor signal.

7. The method according to one of the preceding claims, wherein the method comprises receiving (408) an input of the model (106) that comprises or represents information about a technical system (108), determining (410) an output of the adapted model (106) that the adapted model (106) outputs for the input of the model (106), and outputting (412) the output of the adapted model (106) and/or operating (414) the technical system (108) depending on the output or the adapted model (106).

8. A device (100) for adapting a in particular pretrained model to a task, **characterized in that** the device (100) comprises at least one processor (102) and at least one memory (104), wherein the at least one memory (104) comprises instructions that are executable by the at least one processor (102), and that, when executed by the at least one processor (102) cause the device (100) to execute the method according to one of the preceding claims.

9. A computer program, **characterized in that** the computer program comprises instructions that are executable by a computer and that, when executed by the computer, cause the computer to execute the method according to one of the claims 1 to 7.

10. A data structure, in particular a computer implemented data structure, for adapting an in particular pretrained model (106) to a task, **characterized in that** the data structure comprises at least one data field for an in particular pretrained model (106), wherein the in particular pretrained model (106) comprises a layer that is configured to map a multidimensional input of the layer depending on weights to a multidimensional output of the layer, wherein the data structure comprises at least one data field for a vector that comprises a subset of the weights that weighs the elements of the multidimensional input for a dimension of the output of the layer, wherein the data structure comprises at least one data field for training data, and at least one data field for a transformation and for at least one vector of the transformation for adapting the subset of the weights, wherein the at least one vector has unit length, and the transformation comprises an outer product of the at least one vector with the transposed of the at least one vector, or wherein the at least one vector is normalized to have unit length, and the transformation comprises an outer product of the normalized at least one vector with the transposed of the normalized at least one vector.

**Amended claims in accordance with Rule 137(2) EPC.**

1. A method for adapting an in particular pretrained model (106) to a task, **characterized in that** the method comprises providing (402) the in particular pretrained model (106), wherein the in particular pretrained model (106) comprises a layer that is configured to map a multidimensional input of the layer depending on weights to a multidimensional output of the layer, wherein a vector comprises a subset of the weights that weighs the elements of the multidimensional input for a dimension of the output of the layer, wherein the method comprises providing (404) training data, wherein the training data comprises an input of the model (106) and a ground truth for an output of the model (106), and learning (406) at least one vector of a transformation for adapting the subset of the weights depending on the training data and the output of the model (106) that the model (106) outputs for the input of the model (106), wherein the at least one vector has unit length, and the transformation comprises an outer product of the at least one vector with the transposed of the at least one vector, or wherein the at least one vector is normalized to have unit length, and the transformation comprises an outer product of the normalized at least one vector with the transposed of the normalized at least one vector.

2. The method according to claim 1, **characterized in that** the transformation comprises a single vector, wherein the learning (406) comprises determining the output of the layer depending on a product of the transformation with the weights.

3. The method according to claim 1, **characterized in that** transformation comprises a first vector and a second vector, wherein the learning (406) comprises learning the first vector and the second vector wherein the transformation comprises a difference between the outer product of the second vector with the transposed of the second vector and the outer product of the first vector with the transposed of the first vector.

4. The method according to claim 3, **characterized in that** learning the first vector and the second vector comprises determining the output of the layer depending on a result of a product of the transformation with the weights, wherein the output of the layer depends on a product of the result with a transformation that comprises an outer product of another first vector with the transposed of the other first vector, wherein the other first vector has unit length, or wherein the other first vector is normalized to have unit length, and the transformation comprises an outer product of a second other vector with the transposed of the other second vector, wherein the other second vector has unit length, or wherein the other second vector is normalized to have unit length.

5. The method according to one of the preceding claims, **characterized in that** the model (106) comprises a plurality of layers, wherein the method comprises learning (406), for the respective layers of the plurality of layers a respective at least one vector depending on the training data.

6. The method according to one of the preceding claims, **characterized in that** the model (106) is configured to determine the input of the layer depending on an input of the model (106) and an output of the model (106) depending on the output of the layer, wherein the training data comprises pairs of an input of the model and a ground truth for an output of the model, wherein the input represents or comprises a sensor signal, and wherein the output and the ground truth represents or comprises a classification of the sensor signal, or wherein the input represents or comprises text, and the output and the ground truth represents or comprises a digital image and/or or an audio signal, or wherein the input represents or comprises text and a semantic map, and the output and the ground truth represents or comprises a digital image, or wherein the input represents or comprises at least one operating quantity of a technical system and the output and the ground truth represents or comprises a sensor signal.

7. The method according to one of the preceding claims, wherein the method comprises receiving (408) an input of the model (106) that comprises or represents information about a technical system (108), determining (410) an output of the adapted model (106) that the adapted model (106) outputs for the input of the model (106), and outputting (412) the output of the adapted model (106) and/or operating (414) the technical system (108) depending on the output or the adapted model (106).

8. A device (100) for adapting a in particular pretrained model to a task, **characterized in that** the device (100) comprises at least one processor (102) and at least one memory (104), wherein the at least one memory (104) comprises instructions that are executable by the at least one processor (102), and that, when executed by the at least one processor (102) cause the device (100) to execute the method according to one of the preceding claims.

9. A computer program, **characterized in that** the computer program comprises instructions that are executable by a computer and that, when executed by the computer, cause the computer to execute the method according to one of the claims 1 to 7.

10. A data structure, in particular a computer implemented data structure, for adapting an in particular pretrained model (106) to a task, **characterized in that** the data structure comprises at least one data field for an in particular pretrained model (106), wherein the in particular pretrained model (106) comprises a layer that is configured to map a multidimensional input of the layer depending on weights to a multidimensional output of the layer, wherein the data structure comprises at least one data field for a vector that comprises a subset of the weights that weighs the elements of the multidimensional input for a dimension of the output of the layer, wherein the data structure comprises at least one data field for training data, wherein the training data comprises an input of the model (106) and a ground truth for an output of the model (106), and at least one data field for a transformation and for at least one vector of the transformation for adapting the subset of the weights, wherein the at least one vector has unit length, and the transformation comprises an outer product of the at least one vector with the transposed of the at least one vector, or wherein the at least one vector is normalized to have unit length, and the transformation comprises an outer product of the normalized at least one vector with the transposed of the normalized at least one vector.

Fig. 1

**Fig. 2**

**Fig. 3**

402

404

406

408

410

412

414

**Fig. 4**

Europäisches
Patentamt

European
Patent Office

Office européen
des brevets

# EUROPEAN SEARCH REPORT

**Application Number**

EP 24 16 3474

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2023/122543 A1 (CANON USA INC [US]) 29 June 2023 (2023-06-29) * paragraphs [0004], [0005], [0015], [0019] - [0026] * | 1-10 | INV. G06N3/045 |
| X | US 2023/419188 A1 (XIONG XUEHAN [US] ET AL) 28 December 2023 (2023-12-28) * paragraphs [0024], [0086], [0087] * | 1-10 | |

**TECHNICAL FIELDS SEARCHED (IPC)**

G06N

The present search report has been drawn up for all claims

| Place of search | Date of completion of the search | Examiner |
|---|---|---|
| The Hague | 2 September 2024 | Bykowski, Artur |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 16 3474

This annex lists the patent family members relating to the patent documents cited in the above-mentioned European search report.
The members are as contained in the European Patent Office EDP file on
The European Patent Office is in no way liable for these particulars which are merely given for the purpose of information.

02-09-2024

| Patent document cited in search report | | Publication date | Patent family member(s) | | Publication date |
|---|---|---|---|---|---|
| WO 2023122543 | A1 | 29-06-2023 | NONE | | |
| US 2023419188 | A1 | 28-12-2023 | US 10579869 | B1 | 03-03-2020 |
| | | | US 11030454 | B1 | 08-06-2021 |
| | | | US 2021271874 | A1 | 02-09-2021 |
| | | | US 2023419188 | A1 | 28-12-2023 |

EPO FORM P0459

For more details about this annex : see Official Journal of the European Patent Office, No. 12/82